# EUROPÄISCHE PATENTSCHRIFT

(11) **EP 3 383 139 B1**
(45) Veröffentlichungstag und Bekanntmachung des Hinweises auf die Patenterteilung: **06.08.2025**
(21) Anmeldenummer: 18162372.9
(22) Anmeldetag: 16.03.2018
(51) Int. Cl.: H05B 6/12

(54) **GARGERÄTEVORRICHTUNG**
COOKING DEVICE
DISPOSITIF D'APPAREIL DE CUISSON

(30) Priorität: 30.03.2017 ES 201730493
(43) Veröffentlichungstag der Anmeldung: 03.10.2018
(73) Patentinhaber: BSH Hausgeräte GmbH, 81739 München (DE)
(72) Erfinder: Diez Esteban, Cristina, 50017 Zaragoza (ES); Felices Betran, Jorge, 22003 Huesca (Spain) (ES); Hernandez Blasco, Pablo Jesus, 50019 Zaragoza (ES); Jaca Equiza, Izaskun, 50008 Zaragoza (ES); Lope Moratilla, Ignacio, 50010 Zaragoza (ES); Moya Albertin, Maria Elena, 50002 Zaragoza (ES)

(56) Entgegenhaltungen:
- EP-A1- 2 398 297
- EP-A1- 2 648 477
- EP-A1- 3 035 772
- EP-A1- 3 098 517

## Beschreibung

Die Erfindung betrifft eine Gargerätevorrichtung nach dem Oberbegriff des Anspruchs 1.

Aus dem Stand der Technik ist bereits eine als Kochfeldvorrichtung ausgebildete Gargerätevorrichtung mit einer Heizeinheit bekannt. Die Heizeinheit weist ein inneres Heizelement und ein im Wesentlichen polygonales äußeres Heizelement auf. Das äußere Heizelement weist eine Haupterstreckungsebene und eine Haupterstreckungsrichtung auf. Bei einer senkrechten Betrachtung der Heizeinheit auf die Haupterstreckungsebene weist das äußere Heizelement eine im Wesentlichen rechteckige Gestalt auf. Das innere Heizelement weist bei einer senkrechten Betrachtung der Heizeinheit auf die Haupterstreckungsebene eine im Wesentlichen kreisförmige Gestalt auf. Bei einer senkrechten Betrachtung der Heizeinheit auf die Haupterstreckungsebene ist eine Windungsdichte zwischen einer innersten Windung des inneren Heizelements und einer äußersten Windung des äußeren Heizelements in der Haupterstreckungsrichtung wesentlich geringer als eine Windungsdichte zwischen einer innersten Windung des inneren Heizelements und einer äußersten Windung des äußeren Heizelements in einer senkrecht zu der Haupterstreckungsrichtung ausgerichteten Orthogonalrichtung. Aufgrund dieser mangelnden Symmetrie in Bezug auf die Haupterstreckungsrichtung und die Orthogonalrichtung ergibt sich in aufgestelltem Gargeschirr eine ungleichmäßige Wärmeverteilung. Darüber hinaus resultieren aus dieser mangelnden Symmetrie in Bezug auf die Haupterstreckungsrichtung und die Orthogonalrichtung Leistungsverluste, welche zu Hotspots in der Orthogonalrichtung, insbesondere im Vergleich zu der Haupterstreckungsrichtung, führen.

Dokument EP 3 035 772 A1 offenbart eine Gargerätevorrichtung mit einer Heizeinheit, deren äußeres Heizelement bei einer senkrechten Betrachtung der Heizeinheit auf die Haupterstreckungsebene eine im Wesentlichen rechteckige Gestalt aufweist.

Die Aufgabe der Erfindung besteht insbesondere darin, eine gattungsgemäße Vorrichtung mit verbesserten Eigenschaften hinsichtlich einer Beheizung von aufgestelltem Gargeschirr bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung geht aus von einer Gargerätevorrichtung, insbesondere von einer Kochfeldvorrichtung, mit zumindest einer Heizeinheit, die zumindest ein inneres Heizelement und ein im Wesentlichen polygonales äußeres Heizelement aufweist, wobei zumindest eines der Heizelemente eine Haupterstreckungsebene und eine Haupterstreckungsrichtung aufweist.

Es wird erfindungsgemäß vorgeschlagen, dass bei einer senkrechten Betrachtung der Heizeinheit auf die Haupterstreckungsebene eine Windungsdichte zwischen einer innersten Windung des inneren Heizelements und einer äußersten Windung des äußeren Heizelements in der Haupterstreckungsrichtung im Wesentlichen einer Windungsdichte zwischen einer innersten Windung des inneren Heizelements und einer äußersten Windung des äußeren Heizelements in einer im Wesentlichen und insbesondere vollständig senkrecht zu der Haupterstreckungsrichtung ausgerichteten Orthogonalrichtung entspricht.

Durch die erfindungsgemäße Ausgestaltung kann insbesondere eine optimale Beheizung von aufgestelltem Gargeschirr erreicht werden. Insbesondere kann eine optimierte Flächenbeheizung erzielt werden, und zwar insbesondere in einem Vergleich zu einer Heizeinheit mit zwei ovalen Heizelementen, da insbesondere eine gleichmäßige Verteilung von Leistungsverlusten erreicht werden kann und diese insbesondere in der Haupterstreckungsrichtung und in der Orthogonalrichtung angepasst werden können. Die gleichmäßige Flächenbeheizung kann insbesondere unabhängig von einer Anordnung von Ferriten erzielt werden. Durch das im Wesentlichen polygonale äußere Heizelement können zwei insbesondere analog aufgebaute Heizeinheiten insbesondere kompakt relativ zueinander angeordnet und/oder eine freie Fläche zwischen zwei analog aufgebauten Heizeinheiten, welche benachbart zueinander angeordnet sind, minimal gestaltet werden, wodurch insbesondere eine optimierte Flächenbeheizung vorzugsweise in einem Vergleich zu zwei zueinander benachbarten Heizeinheiten mit jeweils zwei von einer im Wesentlichen polygonalen Gestalt abweichenden äußeren Heizelementen erzielt werden kann. In aufgestelltem Gargeschirr kann insbesondere eine optimierte Wärmeverteilung ermöglicht werden. Insbesondere kann ein einfacher Herstellungsprozess der Heizeinheit erzielt werden. In Bereichen, welche sich von in der Haupterstreckungsrichtung und in der Orthogonalrichtung angeordneten Bereichen unterscheiden, kann insbesondere ausreichend Platz zu einer Anordnung zumindest einer weiteren Einheit, wie beispielsweise zumindest einer Sensoreinheit, geschaffen werden.

Die im Wesentlichen gleiche Windungsdichte in der Haupterstreckungsrichtung und in der Orthogonalrichtung kann insbesondere für verschiedene Ausgestaltungen der wenigstens im Wesentlichen polygonalen Gestalt des äußeren Heizelements erzielt werden.

Unter einer "Gargerätevorrichtung", insbesondere unter einer "Kochfeldvorrichtung" und vorteilhaft unter einer "Induktionskochfeldvorrichtung" soll insbesondere zumindest ein Teil, insbesondere eine Unterbaugruppe, eines Gargeräts, insbesondere Kochfelds und vorteilhaft eines Induktionskochfelds, verstanden werden. Beispielsweise könnte es sich bei einem die Gargerätevorrichtung aufweisenden Gargerät um einen Backofen und/oder um eine Mikrowelle und/oder um ein Grillgerät und/oder um ein Dampfgargerät handeln. Vorteilhaft ist ein als Gargerät ausgebildetes Haushaltsgerät ein Kochfeld und vorzugsweise ein Induktionskochfeld.

Unter einer "Heizeinheit" soll insbesondere eine Einheit verstanden werden, welche zu einer Erhitzung und/oder Beheizung von aufgestelltem Gargeschirr vorgesehen ist. Unter einem "Heizelement" soll in diesem Zusammenhang insbesondere ein Element verstanden werden, welches dazu vorgesehen ist, Energie, vorzugsweise elektrische Energie, in Wärme umzuwandeln und insbesondere zumindest einem Gargeschirr zuzuführen. Vorteilhaft ist das Heizelement insbesondere als Induktionsheizelement ausgebildet und dabei vorzugsweise dazu vorgesehen, ein elektromagnetisches Wechselfeld insbesondere mit einer Frequenz von 20 kHz bis 100 kHz zu erzeugen, das insbesondere dazu vorgesehen ist, in einem aufgestellten, insbesondere metallischen, vorzugsweise ferromagnetischen Gargeschirrboden durch Wirbelstrominduktion und/oder Ummagnetisierungseffekte in Wärme umgewandelt zu werden.

Die Heizeinheit weist vorteilhaft genau ein inneres Heizelement und genau ein äußeres Heizelement auf. Das innere Heizelement ist insbesondere als ein innerstes Heizelement der Heizeinheit ausgebildet. Das äußere Heizelement ist insbesondere als ein äußerstes Heizelement der Heizeinheit ausgebildet.

Das äußere Heizelement weist erfindungsgemäß bei einer senkrechten Betrachtung der Heizeinheit auf die Haupterstreckungsebene eine im Wesentlichen polygonale Gestalt auf.

Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft.

Die Haupterstreckungsrichtung verläuft bei einer senkrechten Betrachtung der Heizeinheit auf die Haupterstreckungsebene insbesondere durch zumindest einen Schwerpunkt und/oder Mittelpunkt der Heizeinheit. Unter einer "Haupterstreckungsrichtung" eines Objekts soll insbesondere eine Richtung verstanden werden, welche parallel zu einer längsten Seite eines kleinsten gedachten geometrischen Quaders ausgerichtet ist, welcher das Objekt gerade noch vollständig umschließt.

Der Ausdruck "wenigstens im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Die Orthogonalrichtung verläuft bei einer senkrechten Betrachtung der Heizeinheit auf die Haupterstreckungsebene insbesondere durch zumindest einen Schwerpunkt und/oder Mittelpunkt der Heizeinheit.

Unter der Wendung, dass eine erste Windungsdichte "wenigstens im Wesentlichen" einer zweiten Windungsdichte entspricht, soll insbesondere verstanden werden, dass ein Quotient aus einer geringeren Windungsdichte der Windungsdichten und einer höheren Windungsdichte der Windungsdichten einen Wert von mindestens 90 %, insbesondere von mindestens 93 %, vorteilhaft von mindestens 95 %, besonders vorteilhaft von mindestens 97 % und vorzugsweise von mindestens 99 % annimmt. Beispielsweise könnte die Windungsdichte in der Haupterstreckungsrichtung höher sein als die Windungsdichte in der Orthogonalrichtung. Alternativ könnte die Windungsdichte in der Haupterstreckungsrichtung geringer sein als die Windungsdichte in der Orthogonalrichtung. Insbesondere können Windungsdichten in der Haupterstreckungsebne und in der Orthogonalrichtung in gewissen Grenzen an gegebene Bedürfnisse und/oder Umstände angepasst werden, was insbesondere bei einem inneren Heizelement mit einer im Wesentlichen kreisförmigen Gestalt unmöglich ist.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Heizelemente jeweils eine eindeutige Längserstreckung aufweisen, die zu der Haupterstreckungsrichtung wenigstens im Wesentlichen parallel ausgerichtet ist. Unter einer "eindeutigen" Längserstreckung eines Objekts soll insbesondere eine Längserstreckung verstanden werden, die größer ist als eine zu der Längserstreckung senkrecht ausgerichtete Erstreckung, wie beispielsweise eine Quererstreckung und/oder eine Dicke, des Objekts. Bei einer senkrechten Betrachtung der Heizeinheit auf die Haupterstreckungsebene sind die Heizelemente insbesondere länglich ausgebildet. Unter "wenigstens im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Dadurch kann insbesondere ein einfacher und/oder schneller Herstellungsprozess der Heizeinheit ermöglicht werden, wodurch insbesondere geringe Kosten erzielt werden können.

Erfindungsgemäß weist das äußere Heizelement bei einer senkrechten Betrachtung der Heizeinheit auf die Haupterstreckungsebene eine im Wesentlichen rechteckige Gestalt auf. Beispielsweise könnte das äußere Heizelement bei einer senkrechten Betrachtung der Heizeinheit auf die Haupterstreckungsebene eine wenigstens im Wesentlichen quadratische Gestalt aufweisen. Insbesondere weist das äußere Heizelement bei einer senkrechten Betrachtung der Heizeinheit auf die Haupterstreckungsebene eine im Wesentlichen rechteckige und insbesondere von einer quadratischen Gestalt verschiedene Gestalt auf. Dadurch können zwei insbesondere analog aufgebaute Heizeinheiten insbesondere kompakt relativ zueinander angeordnet werden, wodurch insbesondere eine optimierte Flächenbeheizung erreicht werden kann.

Weiterhin wird erfindungsgemäß vorgeschlagen, dass das innere Heizelement bei einer senkrechten Betrachtung der Heizeinheit auf die Haupterstreckungsebene eine im Wesentlichen ovale Gestalt aufweist. Beispielsweise könnte das innere Heizelement bei einer senkrechten Betrachtung der Heizeinheit auf die Haupterstreckungsebene eine im Wesentlichen kreisförmige Gestalt aufweisen. Alternativ oder zusätzlich könnte das innere Heizelement bei einer senkrechten Betrachtung der Heizeinheit auf die Haupterstreckungsebene eine im Wesentlichen ellipsenförmige Gestalt aufweisen. Dadurch kann insbesondere zwischen den Heizeinheiten Platz zu einer Anordnung zumindest einer weiteren Einheit geschaffen werden, welche bei einer senkrechten Betrachtung der Heizeinheit auf die Haupterstreckungsebene insbesondere in Eckbereichen des äußeren Heizelements zwischen dem inneren Heizelement und dem äußeren Heizelement angeordnet werden könnte. Durch die im Wesentlichen ovale Gestalt des inneren Heizelements können, insbesondere in einem Vergleich zu einem inneren Heizelement mit einer im Wesentlichen rechteckigen Gestalt, Richtungsänderungen bei einer Wicklung einer Heizleitung vermieden werden, wodurch insbesondere ein einfacher Herstellungsprozess ermöglicht werden kann.

Bei einer senkrechten Betrachtung der Heizeinheit auf die Haupterstreckungsebene weisen erfindungsgemäß eine innerste Windung des äußeren Heizelements und eine äußerste Windung des inneren Heizelements in der Haupterstreckungsrichtung einen Abstand von mindestens 0,5 mm, insbesondere von mindestens 1 mm, vorteilhaft von mindestens 1,5 mm und vorzugsweise von mindestens 2 mm auf. Bei einer senkrechten Betrachtung der Heizeinheit auf die Haupterstreckungsebene weisen eine innerste Windung des äußeren Heizelements und eine äußerste Windung des inneren Heizelements in der Orthogonalrichtung insbesondere einen Abstand von mindestens 0,5 mm, insbesondere von mindestens 1 mm, vorteilhaft von mindestens 1,5 mm und vorzugsweise von mindestens 2 mm auf. Dadurch kann insbesondere eine gleichmäßige Flächenbeheizung ermöglicht und/oder eine Entstehung von Hotspots vermieden werden.

Weiterhin wird vorgeschlagen, dass bei einer senkrechten Betrachtung der Heizeinheit auf die Haupterstreckungsebene eine innerste Windung des äußeren Heizelements und eine äußerste Windung des inneren Heizelements in der Haupterstreckungsrichtung einen Abstand von maximal 25 mm, insbesondere von maximal 20 mm, vorteilhaft von maximal 15 mm und vorzugsweise von maximal 10 mm aufweisen. Bei einer senkrechten Betrachtung der Heizeinheit auf die Haupterstreckungsebene weisen eine innerste Windung des äußeren Heizelements und eine äußerste Windung des inneren Heizelements in der Orthogonalrichtung insbesondere einen Abstand von maximal 25 mm, insbesondere von maximal 20 mm, vorteilhaft von maximal 15 mm und vorzugsweise von maximal 10 mm auf. Dadurch kann insbesondere eine kompakte Ausgestaltung erzielt werden. Insbesondere kann durch eine geringe Erstreckung der Heizeinheit bei einer senkrechten Betrachtung der Heizeinheit auf die Haupterstreckungsebene eine flexible Anordnung der Heizeinheit ermöglicht werden, wodurch insbesondere eine hohe Gestaltungsfreiheit erzielt werden kann.

Beispielsweise könnten das innere Heizelement und das äußere Heizelement elektrisch parallel zueinander geschaltet sein. Insbesondere könnten das innere Heizelement und das äußere Heizelement jeweils einzeln aktivierbar sein. Ein erstes der Heizelemente könnte sich beispielsweise in wenigstens einem Betriebszustand einem aktivierten Zustand befinden und ein zweites der Heizelemente könnte sich insbesondere in demselben Betriebszustand in einem deaktivierten Zustand befinden. Vorzugsweise sind das innere Heizelement und das äußere Heizelement elektrisch in Reihe geschaltet. Insbesondere fließt in wenigstens einem Betriebszustand elektrischer Heizstrom zunächst durch ein erstes der Heizelemente und anschließend durch ein zweites der Heizelemente. Insbesondere sind die Heizelemente insbesondere ausschließlich gemeinsam aktivierbar und/oder deaktivierbar. Das innere Heizelement und das äußere Heizelement befinden sich in wenigstens einem Betriebszustand insbesondere entweder beide in einem aktivierten Zustand oder beide in einem deaktivierten Zustand. Die Heizeinheit könnte insbesondere zumindest einen Übergangsbereich aufweisen, durch welchen das innere Heizelement und das äußere Heizelement voneinander getrennt sein könnten. Beispielsweise könnte der Übergangsbereich eine Breite von zumindest 0,5 cm, insbesondere zumindest 1 cm und vorteilhaft zumindest 2 cm aufweisen. Vorzugsweise weist der Übergangsbereich eine Breite von weniger als 8 cm, insbesondere weniger als 6 cm und vorteilhaft weniger als 5 cm auf. Alternativ ist eine Ausgestaltung unter Vermeidung eines Übergangsbereichs denkbar, bei welcher das innere Heizelement und das äußere Heizelement direkt ineinander übergehen. Insbesondere liegt in dem Übergangsbereich vorteilhaft maximal eine, insbesondere maximal eine halbe, vorzugsweise maximal eine viertel Windung zumindest einer Heizleitung der Heizeinheit. Insbesondere weist die Heizeinheit zumindest eine und vorteilhaft die Heizleitung auf. Dadurch können die Heizelemente insbesondere besonders einfach gesteuert und/oder betrieben werden, wodurch insbesondere ein einfacher Steuerungsalgorithmus verwendet werden kann. Hierdurch kann insbesondere ein geringer Programmieraufwand und/oder geringe Kosten ermöglicht werden.

Zudem wird vorgeschlagen, dass die Gargerätevorrichtung zumindest eine Sensoreinheit aufweist, welche zu einer Detektion zumindest einer Garkenngröße vorgesehen ist und welche insbesondere bei einer senkrechten Betrachtung der Heizeinheit auf die Haupterstreckungsebene zwischen den Heizelementen angeordnet ist. Unter einer "Sensoreinheit" soll insbesondere eine Einheit verstanden werden, welche zumindest einen Detektor zu einer Detektion wenigstens einer Garkenngröße aufweist und welche dazu vorgesehen ist, einen die Garkenngröße kennzeichnenden Wert auszugeben, wobei es sich bei der Garkenngröße vorteilhaft um eine physikalische und/oder chemische Größe handelt. Die Garkenngröße könnte beispielsweise ein Garzustand sein, mittels welchem insbesondere verschiedene Zeitpunkte eines Garprozesses voneinander unterschieden werden könnten. Vorteilhaft ist die Garkenngröße eine Temperatur. Unter der Wendung, dass die Sensoreinheit "zwischen" den Heizelementen angeordnet ist, soll insbesondere verstanden werden, dass bei einer senkrechten Betrachtung der Heizeinheit auf die Haupterstreckungsebene zumindest eine Gerade existiert, welche zumindest einen Punkt des inneren Heizelements und zumindest einen Punkt des äußeren Heizelements miteinander verbindet und welche die Sensoreinheit schneidet. Bei einer senkrechten Betrachtung der Heizeinheit auf die Haupterstreckungsebene schneidet eine Gerade ausgehend von der Sensoreinheit und bei Fortschreiten in zumindest einer insbesondere beliebigen Richtung insbesondere stets zumindest eines der Heizelemente. Dadurch kann insbesondere ein hoher Komfort für einen Bediener erreicht werden. Insbesondere kann freier Platz sinnvoll genutzt werden, wodurch insbesondere eine kompakte Ausgestaltung erzielt werden kann.

Weiterhin wird vorgeschlagen, dass die Gargerätevorrichtung zumindest eine weitere Heizeinheit aufweist, welche analog zu der Heizeinheit aufgebaut ist und welche in wenigstens einem Betriebszustand gemeinsam mit der Heizeinheit zu einer Beheizung eines insbesondere einzigen Gargeschirrs vorgesehen ist. Insbesondere bilden die Heizeinheit und die weitere Heizeinheit in wenigstens einem Betriebszustand eine insbesondere gemeinsame Heizzone insbesondere zu einer Beheizung zumindest eines großen Gargeschirrs aus. Die Heizeinheit und die weitere Heizeinheit sind insbesondere identisch zueinander und vorteilhaft ununterscheidbar. Dadurch können insbesondere selbst große Gargeschirre optimal beheizt werden. Durch das jeweils wenigstens im Wesentlichen polygonale äußere Heizelement der beiden Heizeinheiten können die Heizeinheiten insbesondere kompakt relativ zueinander angeordnet werden, wodurch insbesondere eine optimierte Flächenbeheizung vorzugsweise in einem Vergleich zu zwei zueinander benachbarten Heizeinheiten mit jeweils zwei von einer wenigstens im Wesentlichen polygonalen Gestalt abweichenden äußeren Heizelementen erzielt werden kann.

Die Gargerätevorrichtung soll hierbei nicht auf die oben beschriebene Anwendung und Ausführungsform beschränkt sein. Insbesondere kann die Gargerätevorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Gargerät mit einer Gargerätevorrichtung in einer schematischen Draufsicht,
- Fig. 2: ein Raumteilerelement, eine Heizeinheit, eine weitere Heizeinheit und zwei zusätzliche Heizeinheiten der Gargerätevorrichtung in einer schematischen perspektivischen Darstellung,
- Fig. 3: die Heizeinheit in einer schematischen Draufsicht,
- Fig. 4: die Heizeinheit in einer stark vereinfachten schematischen Draufsicht,
- Fig. 5: ein Ergebnis einer Simulation einer Temperaturverteilung eines durch die Heizeinheit beheizten Gargeschirrbodens in einer schematischen Darstellung,
- Fig. 6: ein Raumteilerelement, zwei Heizeinheiten und zwei weitere Heizeinheiten einer alternativen Gargerätevorrichtung in einer schematischen perspektivischen Darstellung,
- Fig. 7: eine Heizeinheit einer alternativen Gargerätevorrichtung in einer stark vereinfachten schematischen Draufsicht,
- Fig. 8: ein Ergebnis einer Simulation von Leistungsverlusten bei einer Beheizung eines durch die Heizeinheit beheizten Gargeschirrs in einer schematischen Darstellung und
- Fig. 9: eine Heizeinheit einer Gargerätevorrichtung gemäß dem Stand der Technik in einer stark vereinfachten schematischen Draufsicht.

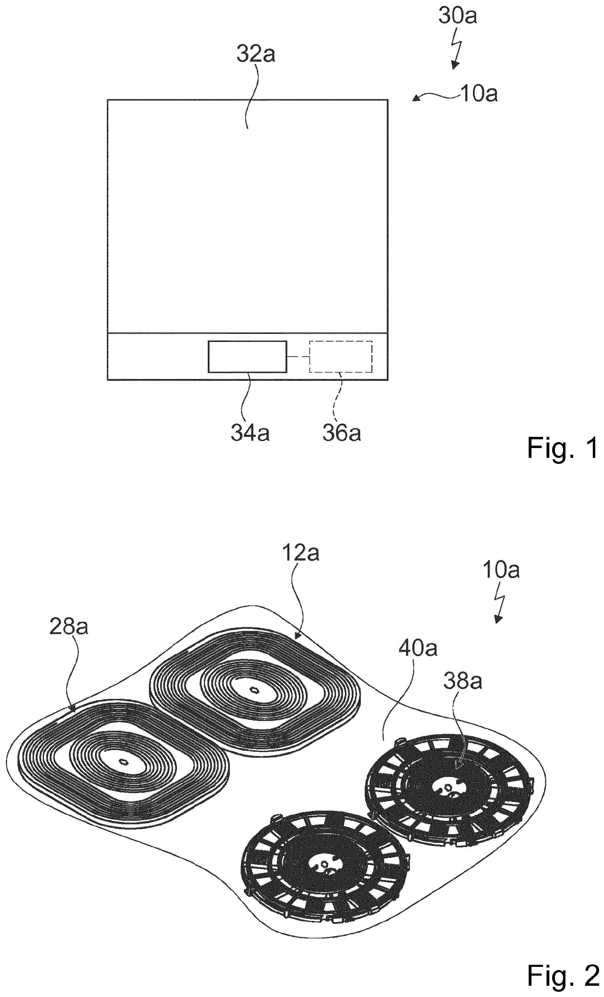

Fig. 1 zeigt ein Gargerät 30a, welches als ein Induktionsgargerät ausgebildet ist, mit einer Gargerätevorrichtung 10a, welche als eine Induktionsgargerätevorrichtung ausgebildet ist. Beispielsweise könnte das Gargerät 30a als ein Grillgerät und/oder als ein Dampfgargerät und/oder als ein Mikrowellengerät und/oder als ein Backofen ausgebildet sein. Im vorliegenden Ausführungsbeispiel ist das Gargerät 30a als ein Kochfeld, und zwar insbesondere als ein Induktionskochfeld, ausgebildet. Die Gargerätevorrichtung 10a ist als eine Kochfeldvorrichtung, und zwar insbesondere als eine Induktionskochfeldvorrichtung, ausgebildet.

Die Gargerätevorrichtung 10a weist eine Geräteplatte 32a auf. Im vorliegenden Ausführungsbeispiel ist die Geräteplatte 32a als eine Kochfeldplatte ausgebildet. In einem montierten Zustand bildet die Geräteplatte 32a einen Teil eines Geräteaußengehäuses, insbesondere des Gargeräts 30a, aus. Die Geräteplatte 32a bildet in einer Einbaulage einen einem Bediener zugewandten Teil des Geräteaußengehäuses aus. In einem montierten Zustand ist die Geräteplatte 32a zu einem Aufstellen von Gargeschirr vorgesehen (nicht dargestellt).

Die Gargerätevorrichtung 10a weist eine Bedienerschnittstelle 34a zu einer Eingabe und/oder Auswahl von Betriebsparametern (vgl. Fig. 1), beispielsweise einer Heizleistung und/oder einer Heizleistungsdichte und/oder einer Heizzone, auf. Die Bedienerschnittstelle 34a ist zu einer Ausgabe eines Werts eines Betriebsparameters an einen Bediener vorgesehen. Beispielsweise könnte die Bedienerschnittstelle 34a den Wert des Betriebsparameters an einen Bediener optisch und/oder akustisch ausgeben.

Die Gargerätevorrichtung 10a weist eine Steuereinheit 36a auf. Die Steuereinheit 36a ist dazu vorgesehen, in Abhängigkeit von mittels der Bedienerschnittstelle 34a eingegebenen Betriebsparametern Aktionen auszuführen und/oder Einstellungen zu verändern.

Die Gargerätevorrichtung 10a weist eine Heizeinheit 12a auf (vgl. Fig. 2 bis 4). Neben der Heizeinheit 12a weist die Gargerätevorrichtung 10a eine weitere Heizeinheit 28a auf. Die Heizeinheit 12a und die weitere Heizeinheit 28a bilden in einem Betriebszustand eine gemeinsame Heizzone. In einem Betriebszustand ist die weitere Heizeinheit 28a gemeinsam mit der Heizeinheit 12a zu einer Beheizung eines aufgestellten Gargeschirrs vorgesehen. Die weitere Heizeinheit 28a ist analog zu der Heizeinheit 12a aufgebaut. Daher wird im Folgenden lediglich die Heizeinheit 12a beschrieben und in Bezug auf eine Beschreibung der weiteren Heizeinheit 28a auf die für die Heizeinheit 12a angeführte Beschreibung verwiesen.

Neben der Heizeinheit 12a und der weiteren Heizeinheit 28a weist die Gargerätevorrichtung 10a zumindest eine zusätzliche Heizeinheit 38a auf (vgl. Fig. 2). Im vorliegenden Ausführungsbeispiel weist die Gargerätevorrichtung 10a zwei zusätzliche Heizeinheiten 38a auf (vgl. Fig. 2). Von mehrfach vorhandenen Objekten ist in den Figuren jeweils lediglich eines mit einem Bezugszeichen versehen. Im Folgenden wird lediglich eine der zusätzlichen Heizeinheiten 38a beschrieben.

Die zusätzliche Heizeinheit 38a weist bei einer senkrechten Betrachtung der zusätzlichen Heizeinheit 38a auf eine Haupterstreckungsebene der zusätzlichen Heizeinheit 38a eine im Wesentlichen ovale, und zwar insbesondere kreisförmige, Gestalt auf. Die zusätzliche Heizeinheit 38a bildet eine eigenständige Heizzone zu einer Beheizung von aufgestelltem Gargeschirr aus.

Die Gargerätevorrichtung 10a weist ein Raumteilerelement 40a auf (vgl. Fig. 2). Das Raumteilerelement 40a ist im vorliegenden Ausführungsbeispiel als ein Abschirmelement ausgebildet. In einem montierten Zustand unterteilt das Raumteilerelement 40a einen von dem Geräteaußengehäuse unterteilten Lagerraum, innerhalb welchem insbesondere die Heizeinheiten 12a, 28a, 38a angeordnet sind.

In einer Einbaulage sind die Heizeinheiten 12a, 28a, 38a oberhalb des Raumteilerelements 40a angeordnet. Die Heizeinheiten 12a, 28a, 38a sind in einer Einbaulage auf dem Raumteilerelement 40a befestigt.

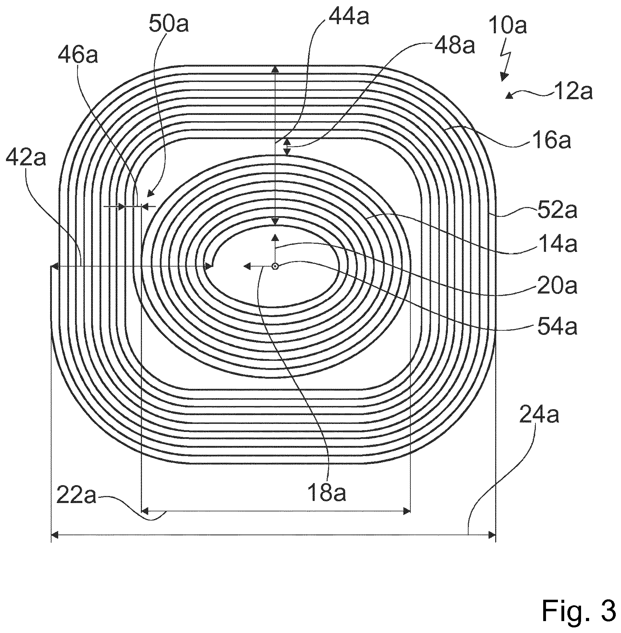

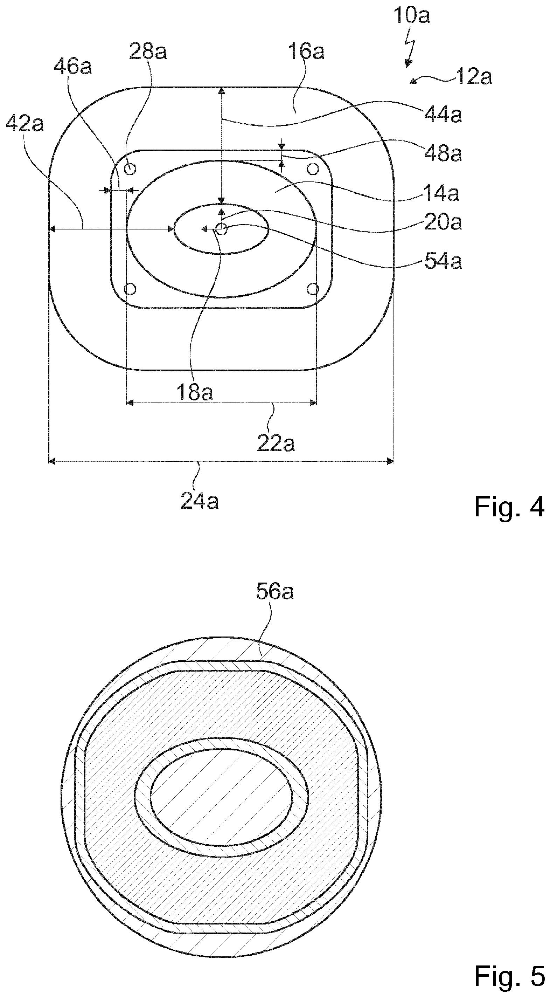

Die Heizeinheit 12a weist ein inneres Heizelement 14a und ein im Wesentlichen polygonales äußeres Heizelement 16a auf (vgl. Fig. 3 und 4). Die Heizelemente 14a, 16a weisen jeweils eine Haupterstreckungsebene auf. Die Haupterstreckungsebene des inneren Heizelements 14a und die Haupterstreckungsebene des äußeren Heizelements 16a sind im vorliegenden Ausführungsbeispiel im Wesentlichen parallel zueinander ausgerichtet. Im Folgenden wird lediglich eine der Haupterstreckungsebenen beschrieben.

Das innere Heizelement 14a weist eine insbesondere eindeutige Haupterstreckungsrichtung 18a auf. Das innere Heizelement 14a weist eine eindeutige Längserstreckung 22a auf. Die Längserstreckung 22a des inneren Heizelements 14a ist zu der Haupterstreckungsrichtung 18a des inneren Heizelements 14a im Wesentlichen parallel ausgerichtet.

Das äußere Heizelement 16a weist eine insbesondere eindeutige Haupterstreckungsrichtung 18a auf. Das äußere Heizelement 16a weist eine eindeutige Längserstreckung 24a auf. Die Längserstreckung 24a des äußeren Heizelements 16a ist zu der Haupterstreckungsrichtung 18a des äußeren Heizelements 16a im Wesentlichen parallel ausgerichtet.

Die Haupterstreckungsrichtung 18a des inneren Heizelements 14a und die Haupterstreckungsrichtung 18a des äußeren Heizelements 16a sind im Wesentlichen parallel zueinander ausgerichtet. Daher wird im Folgenden lediglich eine der Haupterstreckungsrichtungen 18a beschrieben. Die Heizelemente 14a, 16a weisen jeweils eine eindeutige Längserstreckung 22a, 24a auf, die zu der Haupterstreckungsrichtung 18a im Wesentlichen parallel ausgerichtet ist.

Bei einer senkrechten Betrachtung der Heizeinheit 12a auf die Haupterstreckungsebene entspricht eine Windungsdichte zwischen einer innersten Windung des inneren Heizelements 14a und einer äußersten Windung des äußeren Heizelements 16a in der Haupterstreckungsrichtung 18a im Wesentlichen einer Windungsdichte zwischen einer innersten Windung des inneren Heizelements 14a und einer äußersten Windung des äußeren Heizelements 16a in einer im Wesentlichen senkrecht zu der Haupterstreckungsrichtung 18a ausgerichteten Orthogonalrichtung 20a. Im vorliegenden Ausführungsbeispiel beträgt ein Quotient aus der Windungsdichte zwischen einer innersten Windung des inneren Heizelements 14a und einer äußersten Windung des äußeren Heizelements 16a in der Haupterstreckungsrichtung 18a und der Windungsdichte zwischen einer innersten Windung des inneren Heizelements 14a und einer äußersten Windung des äußeren Heizelements 16a in der Orthogonalrichtung 20a im Wesentlichen 1.

Eine Erstreckung zwischen einer innersten Windung des inneren Heizelements 14a und einer äußersten Windung des äußeren Heizelements 16a in der Haupterstreckungsrichtung 18a ist im Folgenden als Haupterstreckung 42a bezeichnet. Eine Erstreckung zwischen einer innersten Windung des inneren Heizelements 14a und einer äußersten Windung des äußeren Heizelements 16a in der Orthogonalrichtung 20a ist im Folgenden als Orthogonalerstreckung 44a bezeichnet.

Die Haupterstreckung 42a und die Orthogonalerstreckung 44a sind im vorliegenden Ausführungsbeispiel im Wesentlichen und insbesondere vollständig identisch. Die Haupterstreckung 42a beträgt im vorliegenden Ausführungsbeispiel im Wesentlichen 72,3 mm. Die Orthogonalerstreckung 44a beträgt im vorliegenden Ausführungsbeispiel im Wesentlichen 72,3 mm.

Das äußere Heizelement 16a weist bei einer senkrechten Betrachtung der Heizeinheit 12a auf die Haupterstreckungsebene eine im Wesentlichen rechteckige Gestalt auf. Im vorliegenden Ausführungsbeispiel weist das innere Heizelement 14a bei einer senkrechten Betrachtung der Heizeinheit 12a auf die Haupterstreckungsebene eine im Wesentlichen ovale Gestalt auf. Das innere Heizelement 14a weist bei einer senkrechten Betrachtung der Heizeinheit 12a auf die Haupterstreckungsebene eine im Wesentlichen ellipsenförmige Gestalt auf.

Bei einer senkrechten Betrachtung der Heizeinheit 12a auf die Haupterstreckungsebene weist eine innerste Windung des äußeren Heizelements 16a und eine äußerste Windung des inneren Heizelements 14a in der Haupterstreckungsrichtung 18a einen Abstand 46a von im Wesentlichen 6 mm auf. Eine innerste Windung des äußeren Heizelements 16a und eine äußerste Windung des inneren Heizelements 14a weisen bei einer senkrechten Betrachtung der Heizeinheit 12a auf die Haupterstreckungsebene in der Orthogonalrichtung 20a einen Abstand 48a von im Wesentlichen 6 mm auf.

Das innere Heizelement 14a und das äußere Heizelement 16a sind elektrisch in Reihe geschaltet. Die Heizeinheit 12a weist einen Übergangsbereich 50a auf (vgl. Fig. 3). Das innere Heizelement 14a und das äußere Heizelement 16a sind durch den Übergangsbereich 50a voneinander getrennt. In dem Übergangsbereich 50a ist im vorliegenden Ausführungsbeispiel eine viertel Windung einer Heizleitung 52a der Heizeinheit 12a angeordnet.

Die Gargerätevorrichtung 10a weist vier Sensoreinheiten 26a auf (vgl. Fig. 3 und 4). Alternativ könnte die Gargerätevorrichtung 10a eine andere Anzahl an Sensoreinheiten 28a aufweisen, wie beispielsweise eine, zwei oder drei Sensoreinheiten 26a. Im Folgenden wird lediglich eine der Sensoreinheiten 26a beschrieben.

Zusätzlich zu der Sensoreinheit 26a weist die Gargerätevorrichtung 10a zumindest eine weitere Sensoreinheit 54a auf (vgl. Fig. 3 und 4). Im vorliegenden Ausführungsbeispiel weist die Gargerätevorrichtung 10a genau eine weitere Sensoreinheit 54a auf. Alternativ sind Ausführungsbeispiele unter Vermeidung und/oder Abwesenheit einer weiteren Sensoreinheit 54a denkbar. Die weitere Sensoreinheit 54a ist bei einer senkrechten Betrachtung der Heizeinheit 12a auf die Haupterstreckungsebene innerhalb des inneren Heizelements 14a und damit insbesondere innerhalb des äußeren Heizelements 16a angeordnet.

Bei einer senkrechten Betrachtung der Heizeinheit 12a auf die Haupterstreckungsebene ist die Sensoreinheit 26a zwischen den Heizelementen 14a, 16a angeordnet. Die Sensoreinheit 26a ist zu einer Detektion einer Garkenngröße vorgesehen. Im vorliegenden Ausführungsbeispiel ist die Sensoreinheit 26a zu einer Detektion einer Temperaturkenngröße vorgesehen. Die Garkenngröße ist als eine Temperaturkenngröße ausgebildet.

Fig. 5 zeigt stark vereinfacht ein Ergebnis einer Simulation einer Temperaturverteilung eines durch die Heizeinheit 12a beheizten Gargeschirrbodens 56a in einer schematischen Darstellung. Je dichter eine Schraffur ausgestaltet ist, desto heißer ist die entsprechende Zone. Zu erkennen ist eine im Wesentlichen gleichmäßige Temperaturverteilung und insbesondere eine Abwesenheit von Hotspots.

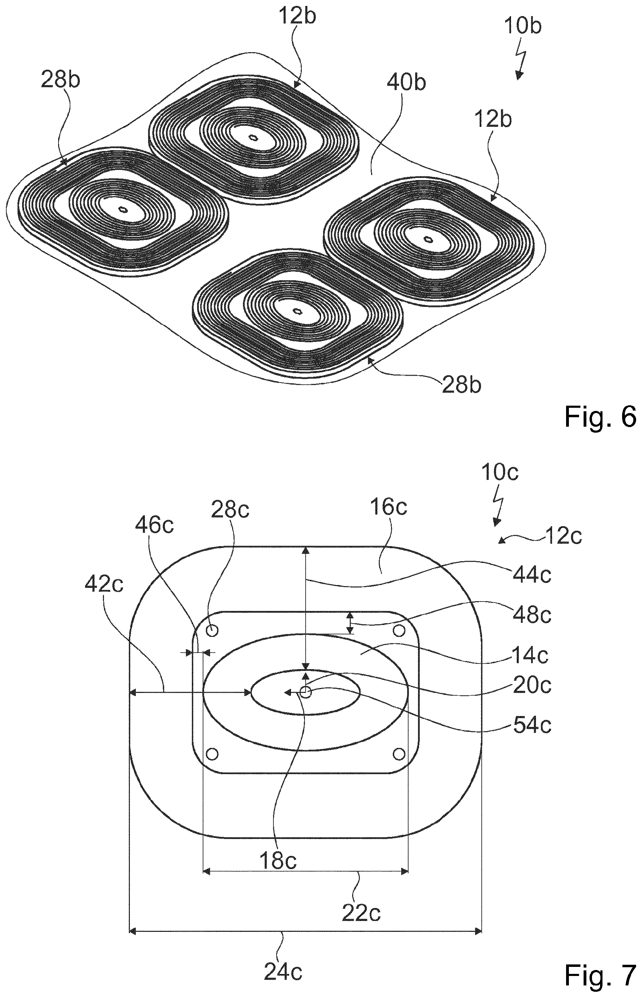

In Fig. 6 bis 9 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 5 verwiesen werden kann. Zur Unterscheidung der Ausführungsbeispiele ist der Buchstabe a in den Bezugszeichen des Ausführungsbeispiels in den Fig. 1 bis 5 durch die Buchstaben b bis d in den Bezugszeichen des Ausführungsbeispiels der Fig. 6 bis 9 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 5 verwiesen werden.

Fig. 6 zeigt eine alternative Gargerätevorrichtung 10b. Die Gargerätevorrichtung 10b weist zwei Heizeinheiten 12b auf. Neben den Heizeinheiten 12b weist die Gargerätevorrichtung 10b zwei weitere Heizeinheiten 28b auf. Jeweils eine der Heizeinheiten 12b und eine der weiteren Heizeinheiten 28b bilden in einem Betriebszustand eine gemeinsame Heizzone.

Fig. 7 zeigt eine Heizeinheit 12c einer alternativen Gargerätevorrichtung 10c. Die Heizeinheit 12c weist ein inneres Heizelement 14c und ein im Wesentlichen polygonales äußeres Heizelement 16c auf. Bei einer senkrechten Betrachtung der Heizeinheit 12c auf eine Haupterstreckungsebene eines der Heizelemente 14c, 16c entspricht eine Windungsdichte zwischen einer innersten Windung des inneren Heizelements 14c und einer äußersten Windung des äußeren Heizelements 16c in einer Haupterstreckungsrichtung 18c eines der Heizelemente 14c, 16c im Wesentlichen einer Windungsdichte zwischen einer innersten Windung des inneren Heizelements 14c und einer äußersten Windung des äußeren Heizelements 16c in einer im Wesentlichen senkrecht zu der Haupterstreckungsrichtung 18c ausgerichteten Orthogonalrichtung 20c.

Im vorliegenden Ausführungsbeispiel beträgt ein Quotient aus der Windungsdichte zwischen einer innersten Windung des inneren Heizelements 14c und einer äußersten Windung des äußeren Heizelements 16c in der Haupterstreckungsrichtung 18c und der Windungsdichte zwischen einer innersten Windung des inneren Heizelements 14c und einer äußersten Windung des äußeren Heizelements 16c in der Orthogonalrichtung 20c im Wesentlichen 0,99.

Eine Haupterstreckung 42c ist im vorliegenden Ausführungsbeispiel kleiner als eine Orthogonalerstreckung 44c. Die Haupterstreckung 42c beträgt im vorliegenden Ausführungsbeispiel im Wesentlichen 72,3 mm. Die Orthogonalerstreckung 44c beträgt im vorliegenden Ausführungsbeispiel im Wesentlichen 73 mm. Die Haupterstreckung 42c ist um im Wesentlichen 0,7 mm kleiner als die Orthogonalerstreckung 44c.

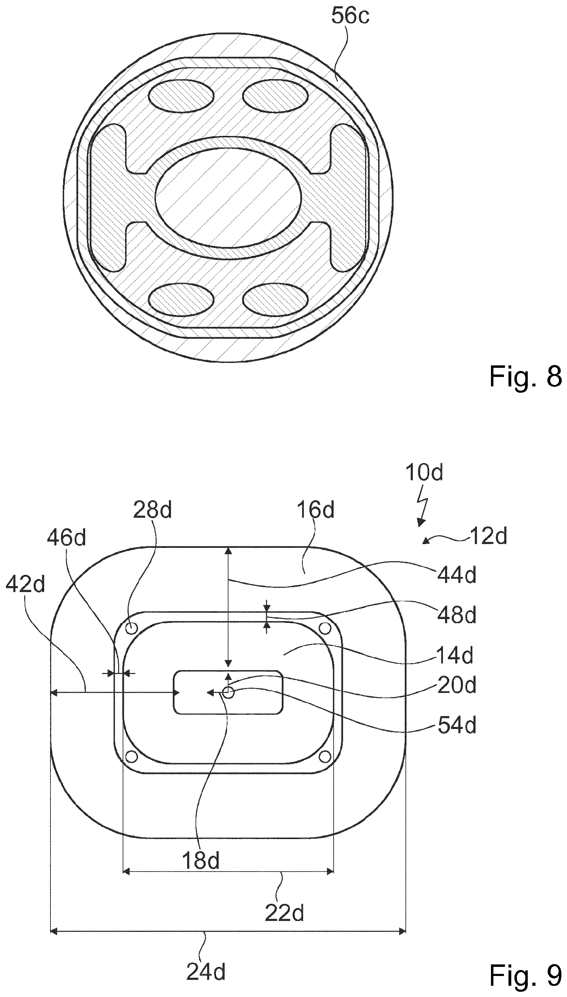

Fig. 8 zeigt stark vereinfacht ein Ergebnis einer Simulation von Leistungsverlusten bei einer Beheizung eines durch die Heizeinheit 12c beheizten Gargeschirrs. Je dichter eine Schraffur ausgestaltet ist, desto höher sind die Leistungsverluste in dem Bereich. Zu erkennen ist, dass Leistungsverluste im Wesentlichen gleichmäßig verteilt sind und dass insbesondere Hotspots, an welchen Leistungsverluste insbesondere besonders hoch sind, fehlen.

Fig. 9 zeigt eine Heizeinheit 12d einer Gargerätevorrichtung 10d gemäß dem Stand der Technik. Die Heizeinheit 12d weist ein inneres Heizelement 14d und ein im Wesentlichen polygonales äußeres Heizelement 16d auf. Die Heizelemente 14d, 16d weisen jeweils eine Haupterstreckungsebene auf. Die Haupterstreckungsebene des inneren Heizelements 14d und die Haupterstreckungsebene des äußeren Heizelements 16d sind im vorliegenden Ausführungsbeispiel im Wesentlichen parallel zueinander ausgerichtet. Im Folgenden wird lediglich eine der Haupterstreckungsebenen beschrieben.

Die Heizelemente 14d, 16d weisen jeweils eine eindeutige Haupterstreckungsrichtung 18d auf. Im Folgenden wird lediglich eine der Haupterstreckungsrichtungen 18d beschrieben. Die Heizelemente 14d, 16d weisen jeweils Längserstreckungen 22d, 24d auf, die zu der Haupterstreckungsrichtung 18d im Wesentlichen parallel ausgerichtet ist.

Das äußere Heizelement 16d weist bei einer senkrechten Betrachtung der Heizeinheit 12d auf die Haupterstreckungsebene eine im Wesentlichen rechteckige Gestalt auf. Im vorliegenden Ausführungsbeispiel weist das innere Heizelement 14d bei einer senkrechten Betrachtung der Heizeinheit 12d auf die Haupterstreckungsebene eine im Wesentlichen rechteckige Gestalt auf.

### Bezugszeichen

- 10: Gargerätevorrichtung
- 12: Heizeinheit
- 14: Inneres Heizelement
- 16: Äußeres Heizelement
- 18: Haupterstreckungsrichtung
- 20: Orthogonalrichtung
- 22: Längserstreckung
- 24: Längserstreckung
- 26: Sensoreinheit
- 28: Weitere Heizeinheit
- 30: Gargerät
- 32: Geräteplatte
- 34: Bedienerschnittstelle
- 36: Steuereinheit
- 38: Zusätzliche Heizeinheit
- 40: Raumteilerelement
- 42: Haupterstreckung
- 44: Orthogonalerstreckung
- 46: Abstand
- 48: Abstand
- 50: Übergangsbereich
- 52: Heizleitung
- 54: Weitere Sensoreinheit
- 56: Gargeschirrboden

## Patentansprüche

1. Gargerätevorrichtung, insbesondere Kochfeldvorrichtung, mit zumindest einer Heizeinheit (12a-d), die zumindest ein inneres Heizelement (14a-d) und ein im Wesentlichen polygonales äußeres Heizelement (16a-d) aufweist, wobei zumindest eines der Heizelemente (14a-d, 16a-d) eine Haupterstreckungsebene und eine Haupterstreckungsrichtung (18a-d) aufweist, wobei bei einer senkrechten Betrachtung der Heizeinheit (12a-d) auf die Haupterstreckungsebene eine Windungsdichte zwischen einer innersten Windung des inneren Heizelements (14a-d) und einer äußersten Windung des äußeren Heizelements (16a-d) in der Haupterstreckungsrichtung (18a-d) im Wesentlichen einer Windungsdichte zwischen einer innersten Windung des inneren Heizelements (14a-d) und einer äußersten Windung des äußeren Heizelements (16a-d) in einer im Wesentlichen senkrecht zu der Haupterstreckungsrichtung (18a-d) ausgerichteten Orthogonalrichtung (20a-d) entspricht, wobei das äußere Heizelement (16a-d) bei einer senkrechten Betrachtung der Heizeinheit (12a-d) auf die Haupterstreckungsebene eine im Wesentlichen rechteckige Gestalt aufweist, **dadurch gekennzeichnet, dass** bei der senkrechten Betrachtung eine innerste Windung des äußeren Heizelements (16a-d) und eine äußerste Windung des inneren Heizelements (14a-d) in der Haupterstreckungsrichtung (18a-d) einen Abstand (46a-d) von mindestens 0,5 mm aufweisen und dass das innere Heizelement (14a-c) bei einer senkrechten Betrachtung der Heizeinheit (12a-c) auf die Haupterstreckungsebene eine im Wesentlichen ovale Gestalt aufweist.

2. Gargerätevorrichtung nach Anspruch 1, **dadurch gekennzeichnet, dass** die Heizelemente (14a-d, 16a-d) jeweils eine eindeutige Längserstreckung (22a-d, 24a-d) aufweisen, die zu der Haupterstreckungsrichtung (18a-d) im Wesentlichen parallel ausgerichtet ist.

3. Gargerätevorrichtung nach einem der vorhergehenden Ansprüche, **dadurch gekennzeichnet, dass** bei einer senkrechten Betrachtung der Heizeinheit (12a-d) auf die Haupterstreckungsebene eine innerste Windung des äußeren Heizelements (16a-d) und eine äußerste Windung des inneren Heizelements (14a-d) in der Haupterstreckungsrichtung (18a-d) einen Abstand (46a-d) von maximal 25 mm aufweisen.

4. Gargerätevorrichtung nach einem der vorhergehenden Ansprüche, **dadurch gekennzeichnet, dass** das innere Heizelement (14a-d) und das äußere Heizelement (16a-d) elektrisch in Reihe geschaltet sind.

5. Gargerätevorrichtung nach einem der vorhergehenden Ansprüche, **gekennzeichnet durch** zumindest eine Sensoreinheit (26a-d), welche zu einer Detektion zumindest einer Garkenngröße vorgesehen ist und welche zwischen den Heizelementen (14a-d, 16a-d) angeordnet ist.

6. Gargerätevorrichtung nach einem der vorhergehenden Ansprüche, **gekennzeichnet durch** zumindest eine weitere Heizeinheit (28a-d), welche analog zu der Heizeinheit (12a-d) aufgebaut ist und welche in wenigstens einem Betriebszustand gemeinsam mit der Heizeinheit (12a-d) zu einer Beheizung eines Gargeschirrs vorgesehen ist.

7. Gargerät, insbesondere Kochfeld, mit zumindest einer Gargerätevorrichtung (10a-d) nach einem der vorhergehenden Ansprüche.

## Claims

1. Cooking appliance apparatus, in particular hob apparatus, having at least one heating unit (12a-d), which has at least one inner heating element (14a-d) and a substantially polygonal outer heating element (16a-d), wherein at least one of the heating elements (14a-d, 16a-d) has a main extent plane and a main extent direction (18a-d), wherein when the heating unit (12a-d) is viewed perpendicularly to the main extent plane, a winding density between an innermost winding of the inner heating element (14a-d) and an outermost winding of the outer heating element (16a-d) in the main extent direction (18a-d) corresponds substantially to a winding density between an innermost winding of the inner heating element (14a-d) and an outermost winding of the outer heating element(16a-d) in an orthogonal direction (20a-d) oriented substantially perpendicularly to the main extent direction (18a-d), wherein when the heating unit (12a-d) is viewed perpendicularly to the main extent plane the outer heating element (16a-d) has a substantially rectangular shape, **characterised in that** when viewed perpendicularly an innermost winding of the outer heating element (16a-d) and an outermost winding of the inner heating element (14a-d) have a spacing (46a-d) of at least 0.5 mm in the main extent direction (18a-d) and that the inner heating element (14a-d) has a substantially oval shape when the heating unit (12a-c) is viewed perpendicularly to the main extent plane.

2. Cooking appliance apparatus according to claim 1, **characterised in that** the heating elements (14a-d, 16a-d) each have a clear longitudinal extent (22a-d, 24a-d) which is oriented substantially parallel to the main extent direction (18a-d).

3. Cooking appliance apparatus according to one of the preceding claims, **characterised in that** when the heating unit (12a-d) is viewed perpendicularly to the main extent plane, an innermost winding of the outer heating element (16a-d) and an outermost winding of the inner heating element (14a-d) have a spacing (46a-d) of at most 25 mm in the main extent direction (18a-d).

4. Cooking appliance apparatus according to one of the preceding claims, **characterised in that** the inner heating element (14a-d) and the outer heating element (16a-d) are electrically connected in series.

5. Cooking appliance apparatus according to one of the preceding claims, **characterised by** at least one sensor unit (26a-d) which is provided for detecting at least one cooking parameter and which is arranged between the heating elements (14a-d, 16a-d).

6. Cooking appliance apparatus according to one of the preceding claims, **characterised by** at least one further heating unit (28a-d) which is of an analogous construction to the heating unit (12a-d) and which, in at least one operating state, is provided together with the heating unit (12a-d) for heating an item of cookware.

7. Cooking appliance, in particular hob, having at least one cooking appliance apparatus (10a-d) according to one on the preceding claims.

## Revendications

1. Dispositif d'appareil de cuisson, en particulier dispositif de table de cuisson, comprenant au moins une unité de chauffage (12a-d), qui comprend au moins un élément chauffant intérieur (14a-d) et un élément chauffant extérieur essentiellement polygonal (16a-d),
dans lequel au moins l'un des éléments chauffants (14a-d, 16a-d) présente un plan d'extension principale et une direction d'extension principale (18a-d),
dans lequel, dans une vue verticale de l'unité de chauffage (12a-d) sur le plan d'extension principale, une densité d'enroulement entre une spire la plus intérieure de l'élément chauffant intérieur (14a-d) et une spire la plus extérieure de l'élément chauffant extérieur (16a-d) dans la direction d'extension principale correspond essentiellement à une densité d'enroulement entre une spire la plus intérieure de l'élément chauffant intérieur (14a-d) et une spire la plus extérieure de l'élément chauffant extérieur (16a-d) dans une direction orthogonale (20a-d) orientée sensiblement perpendiculairement à la direction d'extension principale (18a-d), dans lequel l'élément chauffant extérieur (16a-d) présente une forme essentiellement rectangulaire, dans une vue verticale de l'unité de chauffage (12a-d) sur le plan d'extension principale,
**caractérisé en ce que**, dans une vue verticale, une spire la plus intérieure de l'élément chauffant extérieur (16a-d) et une spire la plus extérieure de l'élément chauffant intérieur (14a-d) dans la direction d'extension principale (18a-d) présentent un espacement (46a-d) d'au moins 0,5 mm et **en ce que** l'élément chauffant intérieur (14a-c) a une forme essentiellement ovale dans une vue verticale de l'unité de chauffage (12a-c) sur le plan d'extension principale.

2. Dispositif d'appareil de cuisson selon la revendication 1, **caractérisé en ce que** les éléments chauffants (14a-d, 16a-d) ont une étendue longitudinale précise (22a-d, 24a-d), qui est orientée sensiblement parallèlement à la direction d'extension principale (18a-d).

3. Dispositif d'appareil de cuisson selon l'une des revendications précédentes, **caractérisé en ce que**, dans une vue verticale de l'unité de chauffage (12a-d) sur le plan d'extension principale, une spire la plus intérieure de l'élément chauffant extérieur (16a-d) et une spire la plus extérieure de l'élément chauffant intérieur (14ad) présentent un espacement (46a-d) maximal de 25 mm.

4. Dispositif d'appareil de cuisson selon l'une des revendications précédentes, **caractérisé en ce que** l'élément chauffant intérieur (14a-d) et l'élément chauffant extérieur (16a-d) sont connectés électriquement en série.

5. Dispositif d'appareil de cuisson selon l'une des revendications précédentes, **caractérisé par** au moins un organe de capteur (26a-d), qui est configuré pour détecter au moins une grandeur caractéristique de cuisson et qui est disposé entre les éléments chauffants (14a-d, 16a-d).

6. Dispositif d'appareil de cuisson selon l'une des revendications précédentes, **caractérisé par** au moins une unité de chauffage supplémentaire (28a-d), qui est constituée de façon analogue à l'unité de chauffage (12a-d), et qui est configurée pour chauffer un ustensile de cuisson conjointement avec l'unité de chauffage (12a-d) dans au moins un état de fonctionnement.

7. Appareil de cuisson, en particulier table de cuisson, comprenant au moins un dispositif d'appareil de cuisson (10a-d) selon l'une des revendications précédentes.
